# EUROPEAN PATENT APPLICATION

(11) **EP 4 610 662 A1**
(43) Date of publication of application: **03.09.2025**
(21) Application number: 23896346.6
(22) Date of filing: 25.10.2023
(51) Int. Cl.: G01P 3/481, G01P 3/489, G01P 21/02

(54) **DATA PROCESSING METHOD AND APPARATUS**

(30) Priority: 29.11.2022 CN 202211513951
(71) Applicant: Shenzhen Yinwang Intelligent Technologies Co., Ltd., Shenzhen, Guangdong 518129 (CN)
(72) Inventor: XIAO, Moyuan, Shenzhen, Guangdong 518129 (CN); CHENG, Hao, Shenzhen, Guangdong 518129 (CN)
(74) Representative: MERH-IP Matias Erny Reichl Hoffmann Patentanwälte PartG mbB
(86) International application number: PCT/CN2023/126618
(87) International publication number: WO 2024/114191

(57) **Abstract**

A data processing method includes: obtaining a plurality of wheel speed voltage signals (S301); and processing the plurality of wheel speed voltage signals by using at least one wheel speed parsing circuit to output result information, where the result information indicates information about edges in the plurality of wheel speed voltage signals (S302), and the at least one wheel speed parsing circuit corresponds to the plurality of wheel speed voltage signals. Wheel speed voltage signal processing efficiency can be improved, and a load rate of a vehicle-mounted processor can be reduced. A data processing apparatus, a system and a vehicle are further disclosed.

## Description

This application claims priority to Chinese Patent Application No. 202211513951.X, filed with the China National Intellectual Property Administration on November 29, 2022, and entitled "DATA PROCESSING METHOD AND APPARATUS", which is incorporated herein by reference in its entirety.

### TECHNICAL FIELD

This application relates to the field of in-vehicle communication, and in particular, to a data processing method and apparatus.

### BACKGROUND

Each wheel is usually equipped with one wheel speed sensor, to monitor a rotation speed of each wheel in real time. When the wheel rotates to generate a changing magnetic field, the wheel speed sensor converts the changing magnetic field into a wheel speed current signal, and the wheel speed current signal is transmitted through a cable. To facilitate a vehicle-mounted processor in parsing the wheel speed current signal, the wheel speed current signal is usually first converted into a wheel speed voltage signal through a wheel speed interface, and then the wheel speed voltage signal is processed by the vehicle-mounted processor.

However, a current vehicle-mounted processor has low wheel speed voltage signal processing efficiency and a high load rate, and it is difficult to meet use requirements of future intelligent driving.

### SUMMARY

This application discloses a data processing method and apparatus, to improve wheel speed voltage signal processing efficiency and reduce a load rate of a vehicle-mounted processor.

According to a first aspect, this application provides a data processing method, and the method includes: obtaining a plurality of wheel speed voltage signals; and processing the plurality of wheel speed voltage signals by using at least one wheel speed parsing circuit to output result information, where the result information indicates information about edges in the plurality of wheel speed voltage signals, and the at least one wheel speed parsing circuit corresponds to the plurality of wheel speed voltage signals.

For example, an edge in a wheel speed voltage signal includes one or more of a rising edge and a falling edge. The rising edge is a continuous increase in signal strength within a period of time, and the falling edge is a continuous decrease in signal strength within a period of time. Information about the edge includes a moment corresponding to the edge and a quantity of edges within preset duration.

Optionally, when a wheel speed parsing circuit can detect both the rising edge in the wheel speed voltage signal and the falling edge in the wheel speed voltage signal, the information about the edge may further include a type of the edge.

For example, the wheel speed parsing circuit may be an application-specific integrated circuit (application-specific integrated circuit, ASIC), or may be a programmable logic device (programmable logic device, PLD), and the PLD may be, for example, a field programmable gate array (field programmable gate array, FPGA).

In the foregoing method, the plurality of wheel speed voltage signals are parsed by using a hardware circuit (namely, the at least one wheel speed parsing circuit), to obtain the result information that can be directly used, for example, that can be directly used by a vehicle-mounted processor. Compared with a conventional technology in which the plurality of wheel speed voltage signals are parsed by using general-purpose computing power of the vehicle-mounted processor, this avoids occurrence of frequent interruptions of the vehicle-mounted processor, improves wheel speed voltage signal parsing efficiency, and implements decoupling between a load rate of the vehicle-mounted processor and wheel speed voltage signal parsing. This helps reduce the load rate of the vehicle-mounted processor and provides a possibility that the vehicle-mounted processor adapts to application requirements of future intelligent driving.

Optionally, the result information is obtained without parsing by using software.

Herein, that the result information is obtained without parsing by using software means that the result information is completely obtained through parsing by the hardware circuit (namely, the wheel speed parsing circuit).

In the foregoing implementation, the result information is obtained through parsing only by using the hardware circuit instead of the software, so that the vehicle-mounted processor can directly obtain the result information obtained through parsing. This reduces consumption of the general-purpose computing power of the vehicle-mounted processor, avoids occurrence of frequent interruptions, and helps improve running reliability of the vehicle-mounted processor.

Optionally, the result information includes a plurality of pieces of the following information:
a type of an edge in each wheel speed voltage signal;
a moment corresponding to a rising edge in each wheel speed voltage signal;
a quantity of rising edges in each wheel speed voltage signal within preset duration;
a moment corresponding to a falling edge in each wheel speed voltage signal; or
a quantity of falling edges in each wheel speed voltage signal within preset duration.

The type of the edge includes the rising edge and the falling edge. For example, a type of an edge may be indicated by using an identifier, a binary value, or the like. This is not specifically limited herein.

Herein, that the result information is completely obtained through parsing by using the hardware circuit means that the at least one wheel speed parsing circuit obtains through parsing the foregoing listed five types of information, namely, the type of the edge in each wheel speed voltage signal, the moment corresponding to the rising edge in each wheel speed voltage signal, the quantity of rising edges in each wheel speed voltage signal within the preset duration, the moment corresponding to the falling edge in each wheel speed voltage signal, and the quantity of falling edges in each wheel speed voltage signal within the preset duration. In this case, the result information is obtained without parsing by using software. Optionally, if the at least one wheel speed parsing circuit obtains only partial information (for example, information about an edge of one type) in the foregoing five types of information through parsing, remaining information (for example, information about an edge of the other type) in the foregoing five types of information may be obtained through parsing with software assistance.

In the foregoing implementation, the information about the moment corresponding to the rising edge and/or the falling edge in the wheel speed voltage signal and information about the quantity of rising edges and/or falling edges in the wheel speed voltage signal within the preset duration can be obtained through parsing quickly by using the at least one wheel speed parsing circuit. This facilitates a downstream apparatus (for example, a vehicle-mounted processor) or software or an operating system of a vehicle-mounted processor in directly using the foregoing information to obtain a wheel rotation speed and/or a traveling speed of a vehicle.

Optionally, that the at least one wheel speed parsing circuit corresponds to the plurality of wheel speed voltage signals includes: each of the at least one wheel speed parsing circuit corresponds to at least one of the plurality of wheel speed voltage signals.

In other words, a correspondence between a wheel speed parsing circuit and a wheel speed voltage signal includes one or more of a one-to-one correspondence and a one-to-many correspondence.

Herein, the one-to-one correspondence may be that each wheel speed parsing circuit corresponds to one wheel speed voltage signal. To be specific, a quantity of the at least one wheel speed parsing circuit is equal to a quantity of the plurality of wheel speed voltage signals. In this case, a plurality of wheel speed parsing circuits can implement parallel processing of the plurality of wheel speed voltage signals, so that wheel speed voltage signals of different wheels are processed without a delay. This improves wheel speed voltage signal processing efficiency, and facilitates subsequent wheel speed real-time refreshing.

The one-to-many correspondence may be that n wheel speed parsing circuits are configured to process m wheel speed voltage signals, where m and n are positive integers and n<m (that is, a quantity of the at least one wheel speed parsing circuit is less than a quantity of the plurality of wheel speed voltage signals), and the n wheel speed parsing circuits may be configured to simultaneously process the wheel speed voltage signals, to improve wheel speed voltage signal processing efficiency.

For example, the n wheel speed parsing circuits include a wheel speed parsing circuit 1. When the wheel speed parsing circuit 1 needs to process p wheel speed voltage signals in the m wheel speed voltage signals, P is an integer not less than 2, and the parsing circuit 1 may sequentially process the p wheel speed voltage signals.

Optionally, the method is applied to a vehicle-mounted processor of a vehicle, and the method further includes: storing the result information, where the result information is stored in a register of the vehicle-mounted processor or stored in a memory of the vehicle-mounted processor.

For example, the vehicle-mounted processor may be, for example, a microcontroller unit (microcontroller unit, MCU), a microprocessor unit (microprocessor unit, MPU), or a system-on-chip (system on chip, SOC). The vehicle-mounted processor may alternatively be, for example, a controller of an electronic stability program (electronic stability program, ESP), a controller of an anti-lock brake system (antilock brake system, ABS), or a chassis domain controller. This is not specifically limited herein.

Herein, the memory is an internal memory that directly exchanges data with the vehicle-mounted processor. The memory can read and write data at a high speed at any time, and is usually used as a temporary data memory of the operating system or another running program (or software).

For example, the memory may be a random access memory (random access memory, RAM), a storage class memory (storage class memory, SCM), or a cache. The RAM may be, for example, a static random-access memory (static random-access memory, SRAM), a dynamic random-access memory (dynamic random-access memory, DRAM), or another random-access memory. This is not specifically limited herein.

For example, the register may be integrated into the at least one wheel speed parsing circuit in the vehicle-mounted processor. In other words, each wheel speed parsing circuit includes one register. Alternatively, the register may be independent of the at least one wheel speed parsing circuit in the vehicle-mounted processor. For example, the at least one wheel speed parsing circuit corresponds to one register. This is not specifically limited herein.

In the foregoing implementation, when the method is applied to the vehicle-mounted processor, the vehicle-mounted processor may store, in a preset location, the result information output by the at least one wheel speed parsing circuit, so that the result information is subsequently obtained from the preset location and directly used, without consuming the load rate of the vehicle-mounted processor to parse the plurality of wheel speed voltage signals to obtain the result information.

Optionally, the result information is stored in the register, and the method further includes: reading the result information from the register by using software or an operating system; and obtaining a wheel rotation speed of the vehicle and/or a traveling speed of the vehicle based on the result information.

In the foregoing implementation, when the method is applied to the vehicle-mounted processor, that is, the at least one wheel speed parsing circuit is integrated into the vehicle-mounted processor, the vehicle-mounted processor may read the result information from the register inside the vehicle-mounted processor by using the software or the operating system, and directly use the result information. This helps reduce the load rate of the vehicle-mounted processor.

Optionally, the method further includes: reporting the wheel rotation speed of the vehicle and/or the traveling speed of the vehicle, where the wheel rotation speed of the vehicle or the traveling speed of the vehicle or both are obtained based on the result information.

For example, the wheel rotation speed of the vehicle or the traveling speed of the vehicle or both may be reported to an apparatus or system, such as a dashboard, an odometer, an inertial measurement unit (inertial measurement unit, IMU), an electronic control unit (electronic control unit, ECU), or an automatic parking system in the vehicle.

In the foregoing implementation, the vehicle-mounted processor may further communicate with an apparatus or a system that needs to use the wheel rotation speed and/or the traveling speed of the vehicle in the vehicle, to better assist in running of the entire vehicle.

Optionally, the method further includes: sending the result information to a vehicle-mounted processor of a vehicle.

In an implementation, the wheel rotation speed of the vehicle or the traveling speed of the vehicle or both may be further sent to the vehicle-mounted processor of the vehicle, where the wheel rotation speed of the vehicle or the traveling speed of the vehicle or both are obtained based on the result information.

In the foregoing implementation, the vehicle-mounted processor does not need to parse the plurality of wheel speed voltage signals, but can directly obtain, from the outside, the result information obtained by parsing the plurality of wheel speed voltage signals. This reduces consumption of the general-purpose computing power of the vehicle-mounted processor, avoids occurrence of frequent interruptions, and helps improve running reliability of the vehicle-mounted processor.

Optionally, the method is applied to a system basis chip (system basis chip, SBC) or a power supply management chip of the vehicle.

In the foregoing implementation, the at least one wheel speed parsing circuit may be integrated into the system basis chip or the power supply management chip, so that the system basis chip or the power supply management chip has a capability of processing a wheel speed voltage signal. This improves system integration of the system basis chip or the power supply management chip.

Optionally, when the wheel rotation speed of the vehicle increases or the traveling speed of the vehicle increases, a change trend of a load rate of the vehicle-mounted processor is smoother than a change trend of a linear change.

Herein, when the vehicle-mounted processor parses the plurality of wheel speed voltage signals by using software, a load of the vehicle-mounted processor is large, and as the wheel rotation speed increases or the traveling speed of the vehicle increases, the change trend of the load rate of the vehicle-mounted processor is a linear change or a quasi-linear change. However, in this application, the plurality of wheel speed voltages are parsed by using the hardware circuit (namely, the at least one wheel speed parsing circuit). The hardware circuit may be integrated into the vehicle-mounted processor, or may be independent of the vehicle-mounted processor. In this case, in a high-speed traveling environment, a change trend of the load rate of the vehicle-mounted processor is smoother than a change trend of a linear change. In addition, when another function of the vehicle is not enabled and only the wheel rotation speed or the traveling speed of the vehicle changes, the load rate of the vehicle-mounted processor may always remain unchanged before and after the wheel rotation speed or the traveling speed of the vehicle changes. This helps improve running reliability of the vehicle.

In addition, with development of autonomous driving technologies, because load rate consumption caused when the vehicle-mounted processor parses the plurality of wheel speed voltage signals is avoided, the vehicle-mounted processor can have as much space as possible to integrate more complex software functions in the future. This provides a possibility that the vehicle-mounted processor adapts to application requirements of future intelligent driving.

Optionally, the obtaining a plurality of wheel speed voltage signals includes: obtaining the plurality of wheel speed voltage signals from a wheel speed interface, where the wheel speed interface is configured to convert a plurality of wheel speed current signals output by a plurality of wheel speed sensors into the plurality of wheel speed voltage signals.

Herein, each wheel speed sensor outputs one wheel speed current signal, and one wheel speed current signal corresponds to one wheel speed voltage signal.

In the foregoing implementation, an analog signal, such as a wheel speed current signal, is converted into a digital signal, such as a wheel speed voltage signal, through the wheel speed interface, to facilitate a wheel speed parsing circuit in subsequently parsing the wheel speed voltage signal. This improves wheel speed voltage signal parsing efficiency.

According to a second aspect, this application provides a data processing apparatus, and the apparatus includes at least one wheel speed parsing circuit, where the at least one wheel speed parsing circuit is configured to obtain a plurality of wheel speed voltage signals, and process the plurality of wheel speed voltage signals to output result information, where the result information indicates information about edges in the plurality of wheel speed voltage signals, and the at least one wheel speed parsing circuit corresponds to the plurality of wheel speed voltage signals.

Optionally, the result information is obtained without parsing by using software.

Optionally, the result information includes a plurality of pieces of the following information:
a type of an edge in each wheel speed voltage signal;
a moment corresponding to a rising edge in each wheel speed voltage signal;
a quantity of rising edges in each wheel speed voltage signal within preset duration;
a moment corresponding to a falling edge in each wheel speed voltage signal; or
a quantity of falling edges in each wheel speed voltage signal within preset duration.

Optionally, that the at least one wheel speed parsing circuit corresponds to the plurality of wheel speed voltage signals includes: each of the at least one wheel speed parsing circuit corresponds to at least one of the plurality of wheel speed voltage signals.

Optionally, the apparatus is a vehicle-mounted processor of a vehicle, and the apparatus further includes a register and/or a memory, where the register or the memory is configured to store the result information.

Optionally, the apparatus further includes a processing apparatus, where the processing apparatus is configured to: read the result information from the register by using software or an operating system; and obtain a wheel rotation speed of the vehicle and/or a traveling speed of the vehicle based on the result information.

Optionally, the apparatus further includes a communication interface, where the communication interface is configured to report the wheel rotation speed of the vehicle and/or the traveling speed of the vehicle, where the wheel rotation speed of the vehicle or the traveling speed of the vehicle or both are obtained based on the result information.

Optionally, the apparatus further includes a communication interface, where the communication interface is configured to send the result information to a vehicle-mounted processor of a vehicle.

Optionally, the apparatus is a system basis chip or a power supply management chip.

Optionally, when the wheel rotation speed of the vehicle increases or the traveling speed of the vehicle increases, a change trend of a load rate of the vehicle-mounted processor is smoother than a change trend of a linear change.

Optionally, the apparatus further includes a wheel speed interface, where the wheel speed interface is configured to receive a plurality of wheel speed current signals output by a plurality of wheel speed sensors, and output the plurality of wheel speed voltage signals to the at least one wheel speed parsing circuit.

According to a third aspect, this application provides a data processing apparatus, and the apparatus includes a communication interface and at least one wheel speed parsing circuit, where the at least one wheel speed parsing circuit is configured to obtain a plurality of wheel speed voltage signals, and process the plurality of wheel speed voltage signals to output result information, where the result information indicates information about edges in the plurality of wheel speed voltage signals, and the at least one wheel speed parsing circuit corresponds to the plurality of wheel speed voltage signals; and the communication interface is configured to send the result information to a vehicle-mounted processor.

According to a fourth aspect, this application provides a data processing apparatus, and the apparatus includes a storage, a processor, and at least one wheel speed parsing circuit, where the at least one wheel speed parsing circuit is configured to obtain a plurality of wheel speed voltage signals, and process the plurality of wheel speed voltage signals to output result information, where the result information indicates information about edges in the plurality of wheel speed voltage signals, and the at least one wheel speed parsing circuit corresponds to the plurality of wheel speed voltage signals; the storage is configured to store the result information; and the processor is configured to obtain the result information from the storage, and obtain a wheel rotation speed of a vehicle and/or a traveling speed of the vehicle based on the result information.

Further, the storage may be a register or a memory.

According to a fifth aspect, this application provides a data processing apparatus, and the apparatus includes a power supply, a wheel speed interface, a communication interface, and at least one wheel speed parsing circuit, where the power supply is configured to supply power to a plurality of wheel speed sensors; the wheel speed interface is configured to receive a plurality of wheel speed current signals output by the plurality of wheel speed sensors, and output a plurality of wheel speed voltage signals; the at least one wheel speed parsing circuit is configured to process the plurality of wheel speed voltage signals to output result information, where the result information indicates information about edges in the plurality of wheel speed voltage signals, and the at least one wheel speed parsing circuit corresponds to the plurality of wheel speed voltage signals; and the communication interface is configured to send the result information to a vehicle-mounted processor.

For example, the apparatus may be a system basis chip SBC or a power supply management chip.

According to a sixth aspect, this application provides a system, and the system includes a wheel speed interface and a first apparatus, where the wheel speed interface is configured to receive a plurality of wheel speed current signals from a plurality of wheel speed sensors, and output a plurality of wheel speed voltage signals; and the first apparatus is configured to process the plurality of wheel speed voltage signals by using at least one wheel speed parsing circuit to obtain result information, and obtain a wheel rotation speed of a vehicle and/or a traveling speed of the vehicle based on the result information, where the result information indicates information about edges in the plurality of wheel speed voltage signals, and the at least one wheel speed parsing circuit corresponds to the plurality of wheel speed voltage signals.

According to a seventh aspect, this application provides a system, and the system includes a wheel speed interface, a first apparatus, and a second apparatus, where the wheel speed interface is configured to receive a plurality of wheel speed current signals from a plurality of wheel speed sensors, and output a plurality of wheel speed voltage signals; the first apparatus is configured to process the plurality of wheel speed voltage signals by using at least one wheel speed parsing circuit to obtain result information, and send the result information to the second apparatus, where the result information indicates information about edges in the plurality of wheel speed voltage signals, and the at least one wheel speed parsing circuit corresponds to the plurality of wheel speed voltage signals; and the second apparatus is configured to receive the result information, obtain a wheel rotation speed of a vehicle and/or a traveling speed of the vehicle based on the result information, and/or report the wheel rotation speed of the vehicle and/or the traveling speed of the vehicle.

Optionally, the wheel speed interface is integrated into the first apparatus.

According to an eighth aspect, this application provides a vehicle, and the vehicle includes the apparatus according to any one of the second aspect or the possible implementations of the second aspect, or includes the apparatus according to the third aspect, the fourth aspect, or the fifth aspect, or includes the system according to the sixth aspect or the seventh aspect.

For specific beneficial effects of technical features in any one of the second aspect to the eighth aspect, refer to the descriptions of beneficial effects of corresponding technical features in the first aspect. Details are not described herein again.

### BRIEF DESCRIPTION OF DRAWINGS

FIG. 1 is a diagram of a system architecture according to an embodiment of this application;
FIG. 2A is a diagram of a processing system according to an embodiment of this application;
FIG. 2B is a diagram of another processing system according to an embodiment of this application;
FIG. 2C is a diagram of still another processing system according to an embodiment of this application;
FIG. 3 is a flowchart of a data processing method according to an embodiment of this application;
FIG. 4 is a flowchart of another data processing method according to an embodiment of this application;
FIG. 5 is a diagram of a structure of a data processing apparatus according to an embodiment of this application;
FIG. 6 is a diagram of a structure of a data processing apparatus according to an embodiment of this application; and
FIG. 7 is a diagram of a structure of a data processing apparatus according to an embodiment of this application.

### DESCRIPTION OF EMBODIMENTS

It should be noted that, in this application, prefix words, such as "first" and "second", are used only to distinguish between different described objects, and do not constitute any limitation on locations, a sequence, priorities, a quantity, content, or the like of the described objects. For example, if a described object is a "field", ordinal numbers before "fields" in a "first field" and a "second field" do not limit locations or a sequence of the "fields", and "first" and "second" do not limit whether the "fields" decorated by the "first" and the "second" are in a same message, and do not limit a sequence of the "first field" and the "second field". For another example, if a described object is a "level", ordinal numbers before "levels" in a "first level" and a "second level" do not limit priorities of the "levels". For another example, a quantity of described objects is not limited by a prefix word, and may be one or more. A "first device" is used as an example, where a quantity of "devices" may be one or more. In addition, objects decorated by different prefix words may be the same or different. For example, if a described object is a "device", a "first device" and a "second device" may be a same device, devices of a same type, or devices of different types. For another example, if a described object is "information", "first information" and "second information" may be information of same content or information of different content. In conclusion, use of the prefix words used to distinguish between the described objects in embodiments of this application does not constitute a limitation on the described objects. For descriptions of the described objects, refer to the context descriptions in the claims or embodiments, and use of the prefix words should not constitute a redundant limitation.

It should be noted that, in embodiments of this application, a description manner like "at least one (or at least one piece) of a₁, a₂, ..., or aₙ" is used, including a case in which any one of a₁, a₂, ..., and aₙ exists alone, and also including a case of any combination of a₁, a₂, ..., and aₙ. Each case may exist alone. For example, a description manner of "at least one of a, b, or c" includes a case of a single a, a single b, a single c, a combination of a and b, a combination of a and c, a combination of b and c, or a combination of a, b, and c.

For ease of understanding, the following first describes related terms that may be used in embodiments of this application.

### (1) System basis chip

The system basis chip (system basis chip, SBC) is an independent chip that includes features, such as power supply, communication, diagnosis monitoring, wake-up management, and a general-purpose input/output (general-purpose input/output, GPIO) interface. A basic circuit functional module of a basic hardware system module is integrated into the SBC. In this way, a peripheral circuit is effectively simplified, and advantages, such as higher system reliability and reduced costs, are provided.

### (2) Power supply management chip

The power supply management chip (power management integrated circuits, PMIC) is a chip responsible for converting electric energy, distributing electric energy, detecting electric energy, and performing other electric energy management in an electronic device system. The main function of the power supply management chip includes voltage regulation, voltage boosting and bucking, current regulation, and alternating current-direct current conversion.

The following describes technical solutions of this application with reference to accompanying drawings.

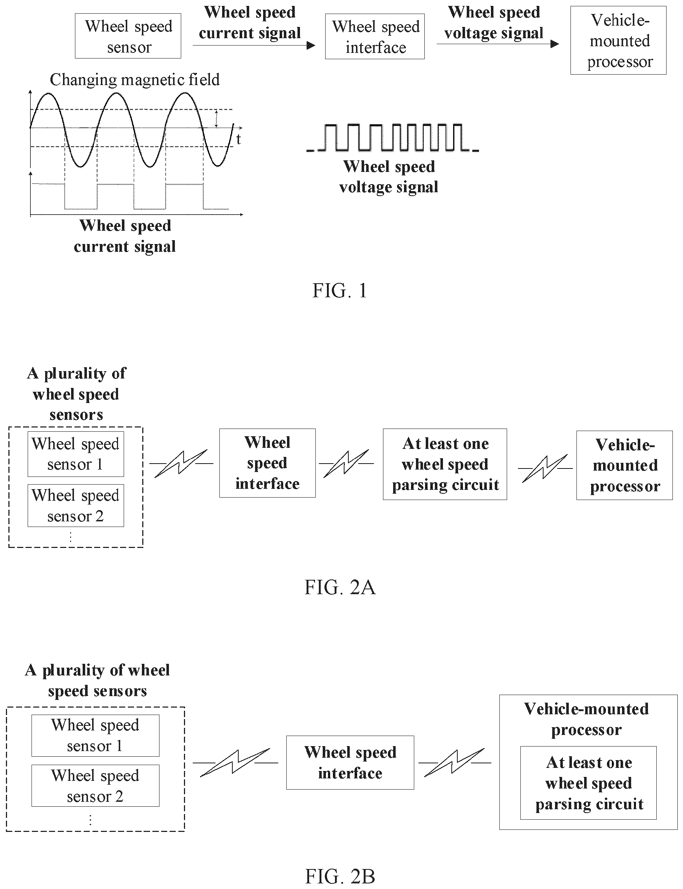

FIG. 1 is a diagram in which a wheel speed voltage signal is processed according to an embodiment of this application.

In FIG. 1, a wheel speed sensor includes a probe and a signal transmission cable. The wheel speed sensor is usually fastened at a position facing a wheel gear ring, and the gear ring includes periodic concavities and convexities. When the concavities and convexities of the gear ring rotate past the probe, a periodically changing magnetic field is generated. A chip in the probe converts the changing magnetic field into a periodic wheel speed current signal (for example, the current square wave pulse shown in FIG. 1), and transmits the wheel speed current signal to the wheel speed interface through a signal transmission cable. The wheel speed interface converts the received wheel speed current signal into a wheel speed voltage signal (for example, the voltage square wave pulse shown in FIG. 1), and transmits the wheel speed voltage signal to the vehicle-mounted processor for processing.

Each wheel is usually equipped with one wheel speed sensor, and each wheel speed sensor outputs one wheel speed current signal. Correspondingly, the wheel speed interface may obtain one wheel speed voltage signal based on the one wheel speed current signal.

However, a vehicle has a plurality of wheels. Therefore, the vehicle-mounted processor in FIG. 1 obtains a plurality of wheel speed voltage signals from the wheel speed interface, and usually performs serial processing on the plurality of wheel speed voltage signals by using software. Consequently, wheel speed voltage signal processing efficiency is low. In addition, it can be learned from FIG. 1 that, a wheel speed voltage signal includes a plurality of rising edges and a plurality of falling edges. When each rising edge or falling edge comes, the vehicle-mounted processor is triggered to generate an interruption to record a type of the edge, a moment corresponding to the edge, and a quantity of edges of the type. When a wheel rotation speed is larger, a quantity of rising edges and falling edges included in the wheel speed voltage signal within a same period is larger, a quantity of occurrence times of interruptions of the vehicle-mounted processor is larger, and a load rate of the vehicle-mounted processor is higher.

For the foregoing problem, an embodiment of this application provides a data processing method, to improve wheel speed voltage signal processing efficiency and reduce a load rate of the vehicle-mounted processor.

FIG. 2A is a diagram of a processing system according to an embodiment of this application. The processing system includes a wheel speed interface, at least one wheel speed parsing circuit, a vehicle-mounted processor, and a plurality of wheel speed sensors. The plurality of wheel speed sensors and the wheel speed interface, the wheel speed interface and the at least one wheel speed parsing circuit, and the at least one wheel speed parsing circuit and the vehicle-mounted processor may communicate with each other in a wireless or wired manner.

Herein, the vehicle-mounted processor may be, for example, a microcontroller unit (microcontroller unit, MCU), a microprocessor unit (microprocessor unit, MPU), or a system on chip (system on chip, SOC). The vehicle-mounted processor may alternatively be, for example, a controller of an electronic stability program (electronic stability program, ESP), a controller of an anti-lock brake system (antilock brake system, ABS), or a chassis domain controller. This is not specifically limited herein.

Specifically, the plurality of wheel speed sensors are configured to output a plurality of wheel speed current signals to the wheel speed interface. The wheel speed interface is configured to receive the plurality of wheel speed current signals, convert the plurality of wheel speed current signals into a plurality of wheel speed voltage signals, and output the plurality of wheel speed voltage signals to the at least one wheel speed parsing circuit. The at least one wheel speed parsing circuit is configured to process the plurality of received wheel speed voltage signals to obtain result information, and output the result information to the vehicle-mounted processor, where the result information indicates information about edges in the plurality of wheel speed voltage signals. The vehicle-mounted processor may directly use the result information, for example, obtain a wheel rotation speed of a vehicle and/or a traveling speed of the vehicle based on the result information.

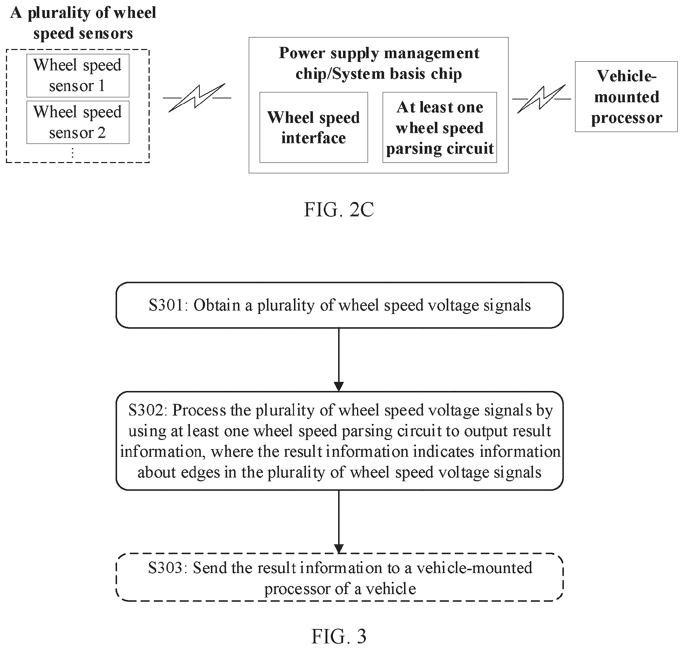

For example, in FIG. 2A, the wheel speed interface may alternatively be separately disposed, and the at least one wheel speed parsing circuit may alternatively exist as a separate parsing chip, for example, an integrated circuit (integrated circuit, IC) integrating the at least one wheel speed parsing circuit. In some possible embodiments, one or more of the at least one wheel speed parsing circuit and the wheel speed interface in FIG. 2A may alternatively be integrated into another chip as a functional module. The another chip may be, for example, a system basis chip, a power supply management chip, an MCU chip, or an MPU chip. Based on different locations at which the at least one wheel speed parsing circuit and the wheel speed interface are integrated, in this embodiment of this application, the processing system may alternatively be in a form shown in FIG. 2B and FIG. 2C.

FIG. 2B is a diagram of another processing system according to an embodiment of this application. In comparison with the processing system shown in FIG. 2A, in the processing system shown in FIG. 2B, at least one wheel speed parsing circuit is integrated into a vehicle-mounted processor.

The processing system shown in FIG. 2B includes a wheel speed interface, the vehicle-mounted processor, and a plurality of wheel speed sensors. The vehicle-mounted processor includes the at least one wheel speed parsing circuit. The plurality of wheel speed sensors and the wheel speed interface, and the wheel speed interface and the vehicle-mounted processor may communicate with each other in a wired or wireless manner. For the vehicle-mounted processor, refer to the descriptions of corresponding content in FIG. 2A. For details about a processing method based on the system shown in FIG. 2B, refer to related descriptions of the following method.

In some possible embodiments, the wheel speed interface in FIG. 2B may exist independently, or may be integrated into a power supply management chip or a system basis chip, or may be integrated into the vehicle-mounted processor together with the at least one wheel speed parsing circuit. This is not specifically limited herein.

FIG. 2C is a diagram of still another processing system according to an embodiment of this application. The processing system shown in FIG. 2C is different from the processing system shown in FIG. 2A in that at least one wheel speed parsing circuit and a wheel speed interface are both integrated into a power supply management chip or a system basis chip.

The processing system shown in FIG. 2C includes the power supply management chip or the system basis chip, a vehicle-mounted processor, and a plurality of wheel speed sensors. The power supply management chip or the system basis chip includes the wheel speed interface and the at least one wheel speed parsing circuit. The plurality of wheel speed sensors and the power supply management chip or the system basis chip, and the power supply management chip or the system basis chip and the vehicle-mounted processor may communicate with each other in a wired or wireless manner. In FIG. 2C, the power supply management chip or the system basis chip may further supply power to the plurality of wheel speed sensors. For the vehicle-mounted processor, refer to the descriptions of corresponding content in FIG. 2A. For details about a processing method based on the system shown in FIG. 2C, refer to related descriptions of the following method.

The processing system shown in FIG. 2A, FIG. 2B, or FIG. 2C may be applied to a plurality of network types, for example, applied to one or more of the following network types: SparkLink (SparkLink), a long term evolution (long term evolution, LTE) network, a 5^{th} generation mobile communication technology (5^{th} generation mobile communication technology, 5G), a wireless local area network (for example, Wi-Fi), Bluetooth (Bluetooth, BT), a Zigbee (Zigbee), or an in-vehicle short-distance wireless communication network.

The processing system shown in FIG. 2A, FIG. 2B, or FIG. 2C may be deployed in a same vehicle.

Herein, the vehicle may be an autonomous vehicle, that is, an autonomous driving system independently performs all or some driving operations, or may be a non-autonomous vehicle, that is, a natural driver needs to perform all driving operations.

For example, the vehicle may alternatively be a conventional vehicle, a new energy vehicle, or the like. The conventional vehicle is a fuel vehicle, for example, may be a gasoline vehicle or a diesel vehicle. The new energy vehicle may be, for example, an electric vehicle (electric vehicle, EV), a hybrid electric vehicle (hybrid electric vehicle, HEV), a range extended electric vehicle (range extended EV), a plug-in hybrid electric vehicle (Plug-in HEV), a fuel cell vehicle, or another new energy vehicle. This is not specifically limited herein.

It should be noted that FIG. 2A, FIG. 2B, or FIG. 2C is merely an example architectural diagram, and a quantity of network elements included in the system shown in FIG. 2A, FIG. 2B, or FIG. 2C is not limited. Although not shown in FIG. 2A, FIG. 2B, or FIG. 2C, another functional entity may be further included in FIG. 2A, FIG. 2B, or FIG. 2C in addition to functional entities shown in FIG. 2A, FIG. 2B, or FIG. 2C. In addition, the method provided in embodiments of this application may be adaptively applied to the communication system shown in FIG. 2A, FIG. 2B, or FIG. 2C. Certainly, the method provided in embodiments of this application may alternatively be applied to another communication system. This is not limited in embodiments of this application.

FIG. 3 is a schematic flowchart of a data processing method according to an embodiment of this application. For example, the method may be applied to an apparatus in which the at least one wheel speed parsing circuit shown in FIG. 2A is located, the vehicle-mounted processor shown in FIG. 2B, or the power supply management chip or the system basis chip shown in FIG. 2C. This is not specifically limited herein.

The method includes but is not limited to the following steps.

S301: Obtain a plurality of wheel speed voltage signals.

In this embodiment of this application, the obtaining a plurality of wheel speed voltage signals is specifically: obtaining the plurality of wheel speed voltage signals from a wheel speed interface.

Herein, the wheel speed interface is configured to convert a plurality of wheel speed current signals output by a plurality of wheel speed sensors into the plurality of wheel speed voltage signals. For example, the wheel speed interface may be used as an independent apparatus, may be integrated into a power supply management chip or a system basis chip, or may be integrated with at least one wheel speed parsing circuit. This is not specifically limited herein.

Each wheel speed sensor outputs one wheel speed current signal, and one wheel speed current signal corresponds to one wheel speed voltage signal.

Each wheel speed voltage signal is a digital signal. Each wheel speed voltage signal includes a plurality of rising edges and a plurality of falling edges, where the rising edge is a continuous increase in signal strength within a period of time, and the falling edge is a continuous decrease in signal strength within a period of time.

For example, one wheel speed voltage signal may be the voltage square wave pulse shown in FIG. 1. It can be learned that the voltage square wave pulse includes eight rising edges and eight falling edges.

In an implementation, when the method is applied to the at least one parsing circuit in FIG. 2A or the vehicle-mounted processor in FIG. 2B, the obtaining the plurality of wheel speed voltage signals from a wheel speed interface includes: receiving the plurality of wheel speed voltage signals sent by the wheel speed interface.

S302: Process the plurality of wheel speed voltage signals by using the at least one wheel speed parsing circuit to output result information, where the result information indicates information about edges in the plurality of wheel speed voltage signals.

In this embodiment of this application, the result information includes a plurality of pieces of the following information:
a type of an edge in each wheel speed voltage signal;
a moment corresponding to a rising edge in each wheel speed voltage signal;
a quantity of rising edges in each wheel speed voltage signal within preset duration;
a moment corresponding to a falling edge in each wheel speed voltage signal; or
a quantity of falling edges in each wheel speed voltage signal within preset duration.

The type of the edge includes the rising edge and the falling edge. For example, when a wheel speed parsing circuit detects a rising edge in a single wheel speed voltage signal, a first identifier is recorded, where the first identifier indicates that a type of the edge is a rising edge. Correspondingly, when the wheel speed parsing circuit detects a falling edge in the single wheel speed voltage signal, a second identifier is recorded, where the second identifier indicates that a type of the edge is a falling edge. In addition, when the wheel speed parsing circuit detects an edge of a specific type in the single wheel speed voltage signal, a timestamp may be further added to record a moment corresponding to the edge of the type.

For example, the type of the edge may be determined by a comparator and a logic circuit in the wheel speed parsing circuit.

For example, a quantity of edges of a specific type in the single wheel speed voltage signal within preset duration may be counted by a counter in the wheel speed parsing circuit.

In some possible embodiments, the result information may include only a moment corresponding to an edge of one type (for example, the rising edge or the falling edge) in each wheel speed voltage signal and a quantity of edges of the type in each wheel speed voltage signal within preset duration. In other words, the at least one wheel speed parsing circuit obtains only partial information in the plurality of wheel speed voltage signals through parsing. In this case, remaining information in the plurality of wheel speed voltage signals further needs to be obtained through parsing with software assistance. For example, a moment corresponding to an edge of the other type in each wheel speed voltage signal and a quantity of edges of the type in each wheel speed voltage signal within the preset duration are parsed by using software. Alternatively, a moment corresponding to an edge of one type (for example, the rising edge) in each wheel speed voltage signal and a quantity of edges of the type within the preset duration that are obtained through parsing by a hardware circuit are predicted by using the software, to obtain a moment corresponding to an edge of the other type (for example, the falling edge) and a quantity of edges of the other type in the wheel speed voltage signal within the preset duration. Therefore, the foregoing five types of information, namely, the type of the edge in each wheel speed voltage signal, the moment corresponding to the rising edge in each wheel speed voltage signal, the quantity of rising edges in each wheel speed voltage signal within the preset duration, the moment corresponding to the falling edge in each wheel speed voltage signal, and the quantity of falling edges in each wheel speed voltage signal within the preset duration, are completely obtained by using the hardware circuit or obtained by using the hardware circuit and software.

Herein, the wheel speed parsing circuit may be, for example, an application-specific integrated circuit (application-specific integrated circuit, ASIC) or a programmable logic device (programmable logic device, PLD). The wheel speed parsing circuit is configured to parse information about an edge in an input single wheel speed voltage signal. Herein, the edge includes at least one of the rising edge and the falling edge.

Herein, that the at least one wheel speed parsing circuit corresponds to the plurality of wheel speed voltage signals specifically means that each of the at least one wheel speed parsing circuit corresponds to at least one of the plurality of wheel speed voltage signals. In other words, a correspondence between a wheel speed parsing circuit and a wheel speed voltage signal may be a one-to-one correspondence or a one-to-many correspondence.

In an implementation, the correspondence between the wheel speed parsing circuit and the wheel speed voltage signal is the one-to-one correspondence. To be specific, when the plurality of wheel speed voltage signals need to be processed, a plurality of wheel speed parsing circuits are configured, and each wheel speed parsing circuit processes one wheel speed voltage signal. In this case, the plurality of wheel speed parsing circuits can implement parallel processing of the plurality of wheel speed voltage signals, so that wheel speed voltage signals of different wheels are processed without a delay. This improves wheel speed voltage signal processing efficiency, and facilitates subsequent wheel speed real-time refreshing. In this case, the foregoing result information is completely obtained through processing by using the hardware circuit, and is obtained without parsing by using the software.

In another implementation, the correspondence between the wheel speed parsing circuit and the wheel speed voltage signal is the one-to-many correspondence. In other words, n wheel speed parsing circuits may be deployed to process m wheel speed voltage signals, where m and n are positive integers and m>n, and the n wheel speed parsing circuits may be configured to simultaneously process the wheel speed voltage signals, to improve wheel speed voltage signal processing efficiency. When a wheel speed parsing circuit 1 in the n wheel speed parsing circuits needs to process p wheel speed voltage signals in the m wheel speed voltage signals, P is an integer not less than 2, and the parsing circuit 1 may sequentially process the p wheel speed voltage signals.

In some possible embodiments, before the at least one wheel speed parsing circuit processes the plurality of wheel speed voltage signals, the plurality of wheel speed voltage signals may be first processed by a filter circuit, to filter out edge glitches of the plurality of wheel speed voltage signals, and then the at least one wheel speed parsing circuit processes the plurality of wheel speed voltage signals whose edge glitches are filtered out, to make the result information output by the at least one wheel speed parsing circuit more accurate and stable. Herein, the edge glitch may also be referred to as noise, and the edge glitch may be caused by PCB trace crosstalk, external interference (for example, ground noise), or the like.

Optionally, in some possible embodiments, when the method is applied to the apparatus in which the at least one wheel speed parsing circuit in FIG. 2A is located, or the power supply management chip or the system basis chip shown in FIG. 2C, the following steps may be further performed.

S303: Send the result information to the vehicle-mounted processor of a vehicle.

For example, the result information may be sent to the vehicle-mounted processor through a serial peripheral interface (serial peripheral interface, SPI) protocol. In some possible embodiments, the result information may alternatively be sent to the vehicle-mounted processor by using a controller local area network (controller area network, CAN) protocol, a local interconnect network (local interconnect network, LIN) protocol, a FlexRay protocol, the Ethernet, or the like. This is not specifically limited herein.

Correspondingly, the vehicle-mounted processor obtains the result information from the at least one wheel speed parsing circuit, and further obtains a wheel rotation speed of the vehicle and/or a traveling speed of the vehicle based on the result information. In other words, the vehicle-mounted processor does not need to parse the plurality of wheel speed voltage signals, but can directly obtain, from an external hardware circuit, the result information obtained by parsing the plurality of wheel speed voltage signals. This reduces consumption of general-purpose computing power of the vehicle-mounted processor, avoids occurrence of frequent interruptions, and helps improve running reliability of the vehicle-mounted processor.

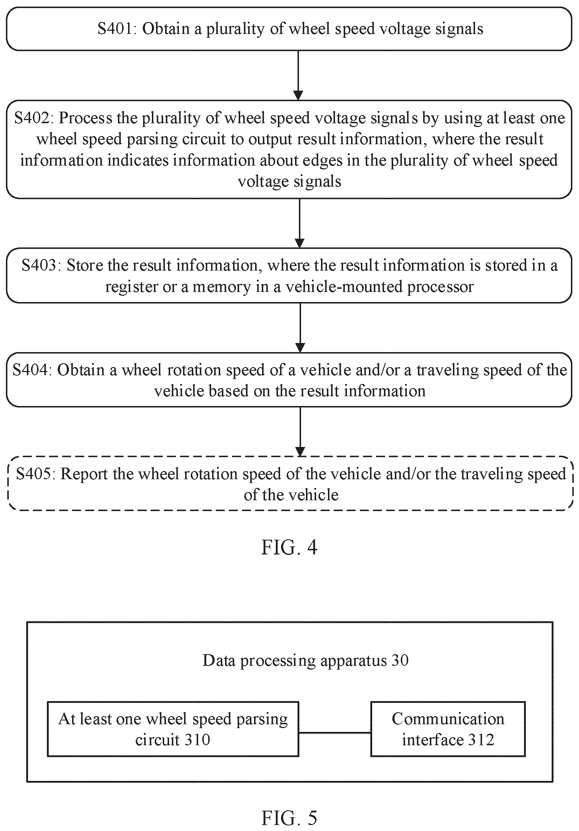

In some possible embodiments, the method may be further applied to the vehicle-mounted processor in FIG. 2B. In this case, for a specific execution process of the vehicle-mounted processor, refer to related descriptions of the embodiment in FIG. 4. Details are not described herein again.

It can be learned that, in this embodiment of this application, tasks that consume a load rate of the vehicle-mounted processor, such as repetitive detection and counting of the edges in the plurality of wheel speed voltage signals, are processed by using the hardware circuit (namely, the at least one wheel speed parsing circuit), to obtain the result information that can be directly used by the vehicle-mounted processor. In this way, the general-purpose computing power of the vehicle-mounted processor does not need to be used to parse the plurality of wheel speed voltage signals. This avoids occurrence of frequent interruptions of the vehicle-mounted processor, and implements decoupling between the load rate of the vehicle-mounted processor and wheel speed voltage signal parsing. Even if the wheel rotation speed or the traveling speed increases, the load rate of the vehicle-mounted processor can remain stable as much as possible. In this way, the vehicle-mounted processor can integrate another complex software function to meet application requirements of future intelligent driving.

FIG. 4 is a flowchart of another data processing method according to an embodiment of this application. For example, the method may be applied to the vehicle-mounted processor in FIG. 2B. At least one wheel speed parsing circuit is integrated into the vehicle-mounted processor. The method includes but is not limited to the following steps.

S401: Obtain a plurality of wheel speed voltage signals.

In an implementation, if a wheel speed interface is independent of the vehicle-mounted processor and used as an independent apparatus, the obtaining a plurality of wheel speed voltage signals is specifically: obtaining the plurality of wheel speed voltage signals from the wheel speed interface.

In an implementation, if the wheel speed interface is independent of the vehicle-mounted processor, the obtaining a plurality of wheel speed voltage signals is specifically: obtaining the plurality of wheel speed voltage signals from the wheel speed interface of the vehicle-mounted processor.

In an implementation, if the wheel speed interface is integrated into a power supply management chip, the obtaining a plurality of wheel speed voltage signals is specifically: obtaining the plurality of wheel speed voltage signals from the power supply management chip. Similarly, if the wheel speed interface is integrated into a system basis chip, the obtaining a plurality of wheel speed voltage signals is specifically: obtaining the plurality of wheel speed voltage signals from the system basis chip.

For details of the plurality of wheel speed voltage signals, refer to the descriptions of corresponding content in S301 in the embodiment in FIG. 3. Details are not described herein again.

S402: Process the plurality of wheel speed voltage signals by using the at least one wheel speed parsing circuit to output result information, where the result information indicates information about edges in the plurality of wheel speed voltage signals. For details about this step, refer to related descriptions of S302 in the embodiment in FIG. 3. Details are not described herein again.

S403: Store the result information, where the result information is stored in a register or a memory in the vehicle-mounted processor.

In an implementation, after the at least one wheel speed parsing circuit outputs the result information, the result information may be stored in the register in the vehicle-mounted processor.

For example, the register may be integrated into the at least one wheel speed parsing circuit in the vehicle-mounted processor. In other words, each wheel speed parsing circuit includes one register. Alternatively, the at least one wheel speed parsing circuit may correspond to one register. This is not specifically limited herein.

In another implementation, after the at least one wheel speed parsing circuit outputs the result information, the result information temporarily stored in the register may be moved to the memory in the vehicle-mounted processor for storage by using direct memory access (direct memory access, DMA) technologies.

Herein, the memory is an internal memory that directly exchanges data with the vehicle-mounted processor. The memory can read and write data at a high speed at any time, and is usually used as a temporary data memory of an operating system or another running program (or software).

For example, the memory may be a random access memory (random access memory, RAM), a storage class memory (storage class memory, SCM), or a cache. The RAM may be, for example, a static random access memory (static random-access memory, SRAM), a dynamic random access memory (dynamic random-access memory, DRAM), or the like. This is not specifically limited herein.

S404: Obtain a wheel rotation speed of a vehicle and/or a traveling speed of the vehicle based on the result information.

In an implementation, the result information is stored in the register in the vehicle-mounted processor, and the obtaining a wheel rotation speed of a vehicle and/or a traveling speed of the vehicle based on the result information includes: reading the result information from the register in the vehicle-mounted processor by using the software or the operating system; and obtaining the wheel rotation speed of the vehicle and/or the traveling speed of the vehicle based on the result information.

In another implementation, the result information is stored in the memory in the vehicle-mounted processor, and the obtaining a wheel rotation speed of a vehicle and/or a traveling speed of the vehicle based on the result information includes: obtaining the wheel rotation speed of the vehicle and/or the traveling speed of the vehicle based on the result information in the memory.

Herein, the wheel rotation speed of the vehicle and the traveling speed of the vehicle may be obtained based on same result information. The traveling speed of the vehicle may be further obtained based on the wheel rotation speed of the vehicle.

For example, the wheel rotation speed of the vehicle may be obtained through calculation based on information about an edge of at least one type in the result information. For example, information about a rising edge includes at least a quantity of rising edges in each wheel speed voltage signal within preset duration. It may be understood that precision of a wheel rotation speed obtained through calculation based on information about edges of two types is higher than precision of a wheel rotation speed obtained through calculation based on information about an edge of one type. In other words, more comprehensive information included in the result information indicates that the wheel rotation speed and/or the traveling speed of the vehicle obtained based on the result information is more accurate.

Optionally, in some possible embodiments, S405 may be further performed.

S405: Report the wheel rotation speed of the vehicle and/or the traveling speed of the vehicle.

For example, the vehicle-mounted processor may further report the wheel rotation speed of the vehicle and/or the traveling speed of the vehicle to an apparatus or system, such as a dashboard, an odometer, an inertia measurement unit (inertial measurement unit, IMU), an electronic control unit (electronic control unit, ECU), or an automatic parking system in the vehicle. In this way, the vehicle-mounted processor may further communicate with an apparatus or a system that needs to use the wheel rotation speed and/or the traveling speed of the vehicle in the vehicle, to better assist in running of the entire vehicle.

It can be learned that, in this embodiment of this application, the vehicle-mounted processor may process the plurality of wheel speed voltage signals to output the result information by using the at least one internally integrated wheel speed parsing circuit instead of original software. In other words, the plurality of wheel speed voltage signals are parsed by using the hardware circuit, and the result information obtained through parsing may be directly used without parsing the plurality of wheel speed voltage signals by using the general-purpose computing power of the vehicle-mounted processor. This avoids occurrence of frequent interruptions, and may greatly reduce a load rate of parsing the wheel speed voltage signals by the vehicle-mounted processor, even when the vehicle travels at a high speed. In this way, in future intelligent driving, the vehicle-mounted processor can integrate another complex software function, and can also better adapt to a high-resolution wheel speed sensor.

FIG. 5 is a diagram of a structure of a data processing apparatus according to an embodiment of this application. In FIG. 5, a data processing apparatus 30 includes at least one wheel speed parsing circuit 310 and a communication interface 312. Herein, the data processing apparatus 30 may be, for example, an apparatus in which the at least one wheel speed parsing circuit in FIG. 2A is located.

The at least one wheel speed parsing circuit 310 is configured to obtain a plurality of wheel speed voltage signals, and process the plurality of wheel speed voltage signals to output result information, where the result information indicates information about edges in the plurality of wheel speed voltage signals, and the at least one wheel speed parsing circuit corresponds to the plurality of wheel speed voltage signals. The communication interface 312 is configured to send the result information to a vehicle-mounted processor.

The data processing apparatus 30 may be configured to implement the method described in the embodiment in FIG. 3. In the embodiment in FIG. 3, the at least one wheel speed parsing circuit 310 may be configured to perform S301 and S302, and the communication interface 312 may be configured to perform S303.

Herein, the at least one wheel speed parsing circuit 310 and the communication interface 312 may communicate with each other through a bus. The bus may include a path for transmitting information between components (for example, the at least one wheel speed parsing circuit 310 and the communication interface 312) of the data processing apparatus 30.

In an implementation, the at least one wheel speed parsing circuit 310 may be, for example, an application-specific integrated circuit (application-specific integrated circuit, ASIC), and some or all functions of S301 are implemented by designing a logical relationship between elements in the circuit.

In another implementation, the at least one wheel speed parsing circuit 310 may be implemented, for example, by using a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement some or all functions of S301.

The communication interface 312 may be, for example, a wired link interface including an Ethernet cable, or may be a wireless link (for example, Wi-Fi, Bluetooth, or universal wireless transmission) interface. Alternatively, the communication interface 312 may further include a transmitter (for example, a radio frequency transmitter or an antenna), a receiver, or the like coupled to the interface.

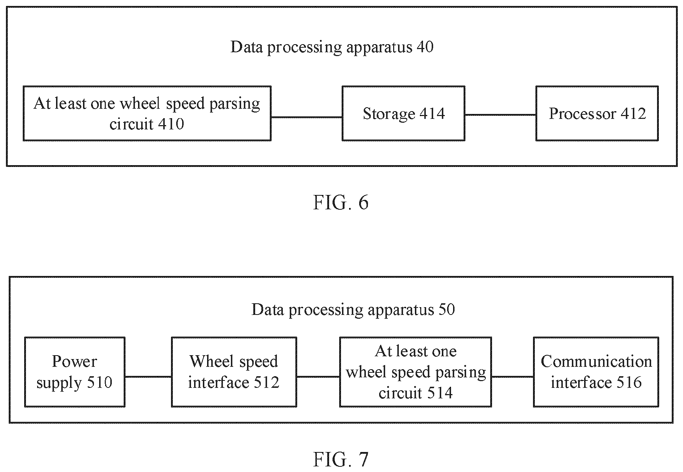

FIG. 6 is a diagram of a structure of a data processing apparatus according to an embodiment of this application. In FIG. 6, a data processing apparatus 40 includes at least one wheel speed parsing circuit 410, a processor 412, and a storage 414. The data processing apparatus 40 may be, for example, the vehicle-mounted processor in FIG. 2B.

The at least one wheel speed parsing circuit 410 is configured to obtain a plurality of wheel speed voltage signals, and process the plurality of wheel speed voltage signals to output result information, where the result information indicates information about edges in the plurality of wheel speed voltage signals, and the at least one wheel speed parsing circuit corresponds to the plurality of wheel speed voltage signals. The storage 414 is configured to store the result information. The processor 412 is configured to obtain the result information from the storage 414, and obtain a wheel rotation speed of a vehicle and/or a traveling speed of the vehicle based on the result information.

The data processing apparatus 40 may be configured to implement the method described in the embodiment in FIG. 4. In the embodiment in FIG. 4, the at least one wheel speed parsing circuit 410 may be configured to perform S401 and S402, the storage 414 may be configured to perform S403, and the processor 412 may be configured to perform S404. In some possible embodiments, the at least one wheel speed parsing circuit 410 may be configured to perform S301 and S302 in the embodiment in FIG. 3.

In some possible embodiments, the data processing apparatus 40 may further include a communication interface (not shown in the figure), and the communication interface may be configured to report the traveling speed of the vehicle and/or the traveling speed of the vehicle. The communication interface may be configured to perform S405 in the embodiment in FIG. 4.

Herein, the at least one wheel speed parsing circuit 410, the processor 412, and the storage 414 may communicate with each other through a bus. The bus may include a path for transmitting information between components (for example, the at least one wheel speed parsing circuit 410, the processor 412, and the storage 414) of the data processing apparatus 40.

For the at least one wheel speed parsing circuit 410, refer to related descriptions of the at least one wheel speed parsing circuit 310 in FIG. 5.

In addition to the result information, the storage 414 may also store data, such as an operating system and a computer program. The storage 414 may be one or a combination of a random access memory (random access memory, RAM), a register, an erasable programmable read-only memory (erasable programmable read-only memory, EPROM), a read-only memory (read-only memory, ROM), a compact disc read-only memory (compact disc read memory, CD-ROM), or the like. The storage 414 may exist independently, or may be integrated into the processor 412. This is not specifically limited herein.

The processor 412 may include one or more general-purpose processors, for example, a central processing unit (Central Processing Unit, CPU), or a combination of a CPU and a hardware chip. The hardware chip may be an application-specific integrated circuit (Application-Specific Integrated Circuit, ASIC), a programmable logic device (Programmable Logic Device, PLD), or a combination thereof. The foregoing PLD may be a complex programmable logic device (Complex Programmable Logic Device, CPLD), a field-programmable gate array (Field-Programmable Gate Array, FPGA), a generic array logic (Generic Array Logic, GAL), or any combination thereof.

In an implementation, the processor 412 may be a circuit having an instruction reading and running capability, for example, a central processing unit (central processing unit, CPU), a microprocessor, or a digital signal processor (digital signal processor, DSP). In another implementation, the processor 412 may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In a reconfigurable hardware circuit, a process in which the processor loads a configuration document to implement hardware circuit configuration may be understood as a process in which the processor loads instructions to implement a corresponding function.

FIG. 7 is a diagram of a structure of a data processing apparatus according to an embodiment of this application. In FIG. 7, a data processing apparatus 50 includes a power supply 510, a wheel speed interface 512, at least one wheel speed parsing circuit 514, and a communication interface 516. The data processing apparatus 50 may be, for example, the power supply management chip or the system basis chip shown in FIG. 2C.

The power supply 510 is configured to supply power to a plurality of wheel speed sensors. The wheel speed interface 512 is configured to receive a plurality of wheel speed current signals output by the plurality of wheel speed sensors and output a plurality of wheel speed voltage signals. The at least one wheel speed parsing circuit 514 is configured to process the plurality of wheel speed voltage signals to output result information, where the result information indicates information about edges in the plurality of wheel speed voltage signals, and the at least one wheel speed parsing circuit corresponds to the plurality of wheel speed voltage signals. The communication interface 516 is configured to send the result information to a vehicle-mounted processor.

The data processing apparatus 50 may be configured to perform the method described in the embodiment in FIG. 3. In the embodiment in FIG. 3, for example, the at least one wheel speed parsing circuit 514 may be configured to perform S301 and S302, and the communication interface 516 may be configured to perform S303.

Herein, the power supply 510, the wheel speed interface 512, the at least one wheel speed parsing circuit 514, and the communication interface 516 may communicate with each other through a bus. The bus may include a path for transmitting information between components (for example, the power supply 510, the wheel speed interface 512, the at least one wheel speed parsing circuit 514, and the communication interface 516) of the data processing apparatus 50.

For the at least one wheel speed parsing circuit 514, refer to related descriptions of the at least one wheel speed parsing circuit 514 in FIG. 5. For the communication interface 516, refer to related descriptions of the communication interface 312 in FIG. 3. Details are not described herein again.

The data processing apparatus 30, the data processing apparatus 40, and the data processing apparatus 50 are different forms of apparatuses having a wheel speed voltage signal processing capability. All components in the apparatus may be implemented in a form of the hardware circuit, or some components may be implemented in a form of software invoked by a processor, and remaining components are implemented in a form of the hardware circuit. This is not specifically limited herein.

In addition, all or some of the components of the apparatus may be integrated, or may be implemented independently. In an implementation, the components are integrated together and implemented in a form of a system-on-a-chip (system-on-a-chip, SOC). The SOC may include at least one processor, configured to implement any one of the methods or implement a function of the apparatus. Types of the at least one processor may be different, for example, including a CPU and an FPGA, a CPU and an artificial intelligence processor, or a CPU and a GPU.

In the foregoing embodiments in this specification, the descriptions of each embodiment have respective focuses. For a part that is not described in detail in an embodiment, refer to related descriptions in another embodiment. In addition, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be noted that a person of ordinary skill in the art may see that, all or a part of the steps in each method of embodiments may be implemented by a program instructing relevant hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read only memory, EPROM), a one-time programmable read-only memory (one-time programmable read-only memory, OTPROM), an electrically-erasable programmable read-only memory (electrically-erasable programmable read-only memory, EEPROM), a compact disc read-only memory (compact disc read-only memory, CD-ROM) or another optical disc storage, a magnetic disk storage, a magnetic tape storage, or any other computer-readable medium capable of carrying or storing data.

## Claims

1. A data processing method, wherein the method comprises:
obtaining a plurality of wheel speed voltage signals; and
processing the plurality of wheel speed voltage signals by using at least one wheel speed parsing circuit to output result information, wherein the result information indicates information about edges in the plurality of wheel speed voltage signals, and the at least one wheel speed parsing circuit corresponds to the plurality of wheel speed voltage signals.

2. The method according to claim 1, wherein the result information is obtained without parsing by using software.

3. The method according to claim 1 or 2, wherein the result information comprises a plurality of pieces of the following information:
a type of an edge in each wheel speed voltage signal;
a moment corresponding to a rising edge in each wheel speed voltage signal;
a quantity of rising edges in each wheel speed voltage signal within preset duration;
a moment corresponding to a falling edge in each wheel speed voltage signal; or
a quantity of falling edges in each wheel speed voltage signal within preset duration.

4. The method according to any one of claims 1 to 3, wherein that the at least one wheel speed parsing circuit corresponds to the plurality of wheel speed voltage signals comprises:
each of the at least one wheel speed parsing circuit corresponds to at least one of the plurality of wheel speed voltage signals.

5. The method according to any one of claims 1 to 4, wherein the method is applied to a vehicle-mounted processor of a vehicle, and the method further comprises:
storing the result information, wherein the result information is stored in a register of the vehicle-mounted processor or stored in a memory of the vehicle-mounted processor.

6. The method according to claim 5, wherein the result information is stored in the register, and the method further comprises:
reading the result information from the register by using software or an operating system; and
obtaining a wheel rotation speed of the vehicle and/or a traveling speed of the vehicle based on the result information.

7. The method according to claim 5 or 6, wherein the method further comprises:
reporting the wheel rotation speed of the vehicle and/or the traveling speed of the vehicle, wherein the wheel rotation speed of the vehicle or the traveling speed of the vehicle or both are obtained based on the result information.

8. The method according to any one of claims 1 to 4, wherein the method further comprises:
sending the result information to a vehicle-mounted processor of a vehicle.

9. The method according to any one of claims 1 to 4, or 8, wherein the method is applied to a system basis chip or a power supply management chip of the vehicle.

10. The method according to any one of claims 5 to 9, wherein when the wheel rotation speed of the vehicle increases or the traveling speed of the vehicle increases, a change trend of a load rate of the vehicle-mounted processor is smoother than a change trend of a linear change.

11. The method according to any one of claims 1 to 10, wherein the obtaining a plurality of wheel speed voltage signals comprises:
obtaining the plurality of wheel speed voltage signals from a wheel speed interface, wherein the wheel speed interface is configured to convert a plurality of wheel speed current signals output by a plurality of wheel speed sensors into the plurality of wheel speed voltage signals.

12. A data processing apparatus, wherein the apparatus comprises at least one wheel speed parsing circuit, wherein
the at least one wheel speed parsing circuit is configured to obtain a plurality of wheel speed voltage signals, and process the plurality of wheel speed voltage signals to output result information, wherein the result information indicates information about edges in the plurality of wheel speed voltage signals, and the at least one wheel speed parsing circuit corresponds to the plurality of wheel speed voltage signals.

13. The apparatus according to claim 12, wherein the result information is obtained without parsing by using software.

14. The apparatus according to claim 12 or 13, wherein the result information comprises a plurality of pieces of the following information:
a type of an edge in each wheel speed voltage signal;
a moment corresponding to a rising edge in each wheel speed voltage signal;
a quantity of rising edges in each wheel speed voltage signal within preset duration;
a moment corresponding to a falling edge in each wheel speed voltage signal; or
a quantity of falling edges in each wheel speed voltage signal within preset duration.

15. The apparatus according to any one of claims 12 to 14, wherein that the at least one wheel speed parsing circuit corresponds to the plurality of wheel speed voltage signals comprises:
each of the at least one wheel speed parsing circuit corresponds to at least one of the plurality of wheel speed voltage signals.

16. The apparatus according to any one of claims 12 to 15, wherein the apparatus is a vehicle-mounted processor of a vehicle, and the apparatus further comprises a register and/or a memory, wherein
the register or the memory is configured to store the result information.

17. The apparatus according to claim 16, wherein the apparatus further comprises a processing apparatus, wherein the processing apparatus is configured to:
read the result information from the register by using software or an operating system; and
obtain a wheel rotation speed of the vehicle and/or a traveling speed of the vehicle based on the result information.

18. The apparatus according to claim 16 or 17, wherein the apparatus further comprises a communication interface, wherein
the communication interface is configured to report the wheel rotation speed of the vehicle and/or the traveling speed of the vehicle, wherein the wheel rotation speed of the vehicle or the traveling speed of the vehicle or both are obtained based on the result information.

19. The apparatus according to claims 12 to 15, wherein the apparatus further comprises a communication interface, wherein
the communication interface is configured to send the result information to a vehicle-mounted processor of a vehicle.

20. The apparatus according to any one of claims 12 to 15, or 19, wherein the apparatus is a system basis chip or a power supply management chip.

21. The apparatus according to any one of claims 16 to 20, wherein when the wheel rotation speed of the vehicle increases or the traveling speed of the vehicle increases, a change trend of a load rate of the vehicle-mounted processor is smoother than a change trend of a linear change.

22. The apparatus according to any one of claims 12 to 21, wherein the apparatus further comprises a wheel speed interface, wherein
the wheel speed interface is configured to receive a plurality of wheel speed current signals output by a plurality of wheel speed sensors, and output the plurality of wheel speed voltage signals to the at least one wheel speed parsing circuit.

23. A data processing apparatus, wherein the apparatus comprises:
a communication interface and at least one wheel speed parsing circuit, wherein
the at least one wheel speed parsing circuit is configured to obtain a plurality of wheel speed voltage signals, and process the plurality of wheel speed voltage signals to output result information, wherein the result information indicates information about edges in the plurality of wheel speed voltage signals, and the at least one wheel speed parsing circuit corresponds to the plurality of wheel speed voltage signals; and
the communication interface is configured to send the result information to a vehicle-mounted processor.

24. A data processing apparatus, wherein the apparatus comprises:
a storage, a processor, and at least one wheel speed parsing circuit, wherein
the at least one wheel speed parsing circuit is configured to obtain a plurality of wheel speed voltage signals, and process the plurality of wheel speed voltage signals to output result information, wherein the result information indicates information about edges in the plurality of wheel speed voltage signals, and the at least one wheel speed parsing circuit corresponds to the plurality of wheel speed voltage signals;
the storage is configured to store the result information; and
the processor is configured to obtain the result information from the storage, and obtain a wheel rotation speed of a vehicle and/or a traveling speed of the vehicle based on the result information.

25. A data processing apparatus, wherein the apparatus comprises:
a power supply, a wheel speed interface, a communication interface, and at least one wheel speed parsing circuit, wherein
the power supply is configured to supply power to a plurality of wheel speed sensors;
the wheel speed interface is configured to receive a plurality of wheel speed current signals output by the plurality of wheel speed sensors, and output a plurality of wheel speed voltage signals;
the at least one wheel speed parsing circuit is configured to process the plurality of wheel speed voltage signals to output result information, wherein the result information indicates information about edges in the plurality of wheel speed voltage signals, and the at least one wheel speed parsing circuit corresponds to the plurality of wheel speed voltage signals; and
the communication interface is configured to send the result information to a vehicle-mounted processor.

26. A system, wherein the system comprises a wheel speed interface and a first apparatus, wherein
the wheel speed interface is configured to receive a plurality of wheel speed current signals from a plurality of wheel speed sensors, and output a plurality of wheel speed voltage signals; and
the first apparatus is configured to process the plurality of wheel speed voltage signals by using at least one wheel speed parsing circuit to obtain result information, and obtain a wheel rotation speed of a vehicle and/or a traveling speed of the vehicle based on the result information, wherein the result information indicates information about edges in the plurality of wheel speed voltage signals, and the at least one wheel speed parsing circuit corresponds to the plurality of wheel speed voltage signals.

27. A system, wherein the system comprises a wheel speed interface, a first apparatus, and a second apparatus, wherein
the wheel speed interface is configured to receive a plurality of wheel speed current signals from a plurality of wheel speed sensors, and output a plurality of wheel speed voltage signals;
the first apparatus is configured to process the plurality of wheel speed voltage signals by using at least one wheel speed parsing circuit to obtain result information, and send the result information to the second apparatus, wherein the result information indicates information about edges in the plurality of wheel speed voltage signals, and the at least one wheel speed parsing circuit corresponds to the plurality of wheel speed voltage signals; and
the second apparatus is configured to receive the result information, obtain a wheel rotation speed of a vehicle and/or a traveling speed of the vehicle based on the result information, and/or report the wheel rotation speed of the vehicle and/or the traveling speed of the vehicle.

28. The system according to claim 27, wherein the wheel speed interface is integrated into the first apparatus.

29. A vehicle, wherein the vehicle comprises the apparatus according to any one of claims 12 to 22, or 23 to 25, or comprises the system according to any one of claims 26 to 28.
